Europäisches Patentamt

European Patent Office

Office européen des brevets

(11) Numéro de publication: **0 345 129**
**A1**

## (12) DEMANDE DE BREVET EUROPEEN

(21) Numéro de dépôt: **89401446.3**

(22) Date de dépôt: **26.05.89**

(51) Int. Cl.⁴: **B 62 D 51/06**

(30) Priorité: **30.05.88 FR 8807154**

(43) Date de publication de la demande:
**06.12.89 Bulletin 89/49**

(84) Etats contractants désignés:
**AT BE CH DE ES FR GB IT LI SE**

(71) Demandeur: **Lacroix, André**
**138 Avenue Ernest Ruben**
**F-87000 Limoges (FR)**

(72) Inventeur: **Lacroix, André**
**138 Avenue Ernest Ruben**
**F-87000 Limoges (FR)**

(74) Mandataire: **Fruchard, Guy et al**
**CABINET BOETTCHER 23, rue la Boétie**
**F-75008 Paris (FR)**

(54) **Dispositif auto porté pour l'actionnement d'outils.**

(57) Dispositif comportant une roue cage (1) à l'intérieur de laquelle est monté un châssis mobile (6), ce châssis supportant un moteur d'entraînement (11) relié à un organe d'entraînement (9) disposé à l'intérieur de la roue cage en regard d'une crémaillère (4) fixée à l'intérieur de la roue cage dans un plan médian de celle-ci, la roue cage (1) a une forme de coquille circulaire ayant, selon une coupe transversale, un profil externe convexe et le châssis est supporté par des organes de positionnement (7,9) prenant appui à l'intérieur de la roue cage, l'organe de positionnement inférieur (9) assurant la fonction d'organe d'entraînement.

Fig. 1

EP 0 345 129 A1

# Description

## Dispositif auto porté pour l'actionnement d'outils.

La présente invention concerne un dispositif auto-porté pour l'actionnement d'outils plus particulièrement, bien que non exclusivement, pour l'actionnement d'outils de coupe pour une exploitation forestière.

On sait que pour qu'une forêt soit bien tenue et permettre une croissance optimale des arbres qui la composent, il est nécessaire de procéder de façon régulière à certains travaux de taille et de débroussaillage. On connaît de nombreux dispositifs destinés à assurer l'exploitation forestière. En particulier, il existe un certain nombre de dispositifs destinés à être portés à dos d'homme afin de pouvoir être transportés sur le lieu d'utilisation quelle que soit la configuration du terrain tant pour l'accès au chantier forestier que pour le travail sur le chantier lui-même. De tels dispositifs sont toutefois extrêmement fatiguants à manier puisque l'opérateur doit supporter le poids des moyens d'actionnement des outils pendant tout le temps du travail. On connaît des dispositifs auto-portés, généralement sous forme de tracteurs de plus ou moins grandes dimensions. Ces dispositifs sont satisfaisants lorsque le terrain n'est pas trop accidenté et surtout lorsqu 'il existe des passages suffisamment dégagés pour permettre l'accès au chantier forestier. Cependant, de tels dispositifs sont totalement impraticables sur des terrains très accidentés ou dans des zones très denses en végétations jeunes ou en broussailles.

Un but de la présente invention est de proposer un dispositif d'une très grande maniabilité permettant à la fois un transport aisé vers le lieu de travail et une manipulation facile sur le lieu de travail lui-même.

En vue de la réalisation de ce but, on prévoit selon l'invention un dispositif auto-porté pour l'actionnement d'outils comportant une roue cage à l'intérieur de laquelle est monté un châssis mobile par rapport à la roue cage, ce châssis supportant un moteur d'entraînement relié à un organe d'entraînement disposé à l'intérieur de la roue cage en regard d'une crémaillère fixée à l'intérieur de la roue cage dans un plan médian de celle-ci, le châssis étant équipé de brancards s'étendant vers l'extérieur de la roue cage de part et d'autre de celle-ci, dans lequel la roue cage a une forme de coquille circulaire ayant, selon une coupe transversale, un profil externe convexe, et le châssis est supporté par des organes de positionnement prenant appui à l'intérieur de la roue cage, l'organe de positionnement inférieur assurant la fonction d'organe d'entraînement.

Ainsi le chassis est monté pour pivoter librement à l'intérieur de la roue cage et sa position est aisement déterminée en agissant sur les brancards tandis que le profil particulier de la roue cage lui confère une très grande stabilité dans des configurations de terrain et de végétation extrêmement variées.

Selon une version avantageuse de l'invention, l'organe d'entraînement est une poulie à gorge disposée à cheval sur la crémaillère et supportant des rouleaux s'étendant transversalement à la gorge et disposés selon un pas égal à un pas de la crémaillère, la poulie à gorge comportant des flancs ayant un bord périphérique prenant appui à l'intérieur de la roue cage.

Ainsi, l'ensemble du poids du châssis mobile et des organes qui lui sont associés s'applique sur l'intérieur de la roue cage et assure un entraînement en souplesse de la roue cage, les rouleaux transversaux ne servant qu'à assister l'entraînement lors d'un glissement du bord périphérique de la poulie à gorge par rapport à la roue cage.

De préférence, les organes de positionnement qui ne sont pas reliés au moteur d'entraînement sont des poulies à gorge montées pour tourner librement sur un axe parallèle à l'axe de la roue cage, ces poulies étant disposées à cheval sur la crémaillère. Ainsi, les différents éléments disposés à l'intérieur de la roue et fixés au châssis, sont maintenus solidaires de la roue sans réduire de façon sen sible le couple d'entraînement transmis à la roue.

Selon d'autres aspects avantageux de l'invention, le dispositif comporte une pompe hydraulique d'entraînement fixée au moteur d'entraînement pour tourner avec celle-ci, cette pompe hydraulique ayant une sortie reliée à un moteur hydraulique ayant un axe solidaire en rotation d'un organe de positionnement devant être entraîné en rotation; la pompe hydraulique d'entraînement est une pompe à débit variable; les moyens d'actionnement d'outils comprennent une pompe hydraulique fixée au moteur d'entraînement pour tourner avec celui-ci. Ainsi, on obtient une grande souplesse d'utilisation tant pour l'entraînement du dispositif lui-même que pour l'actionnement des outils.

D'autres caractéristiques et avantages de l'invention apparaîtront encore à la lecture de la description qui suit d'un mode de réalisation particulier non limitatif de l'invention en liaison avec les dessins ci-joints parmi lesquels:

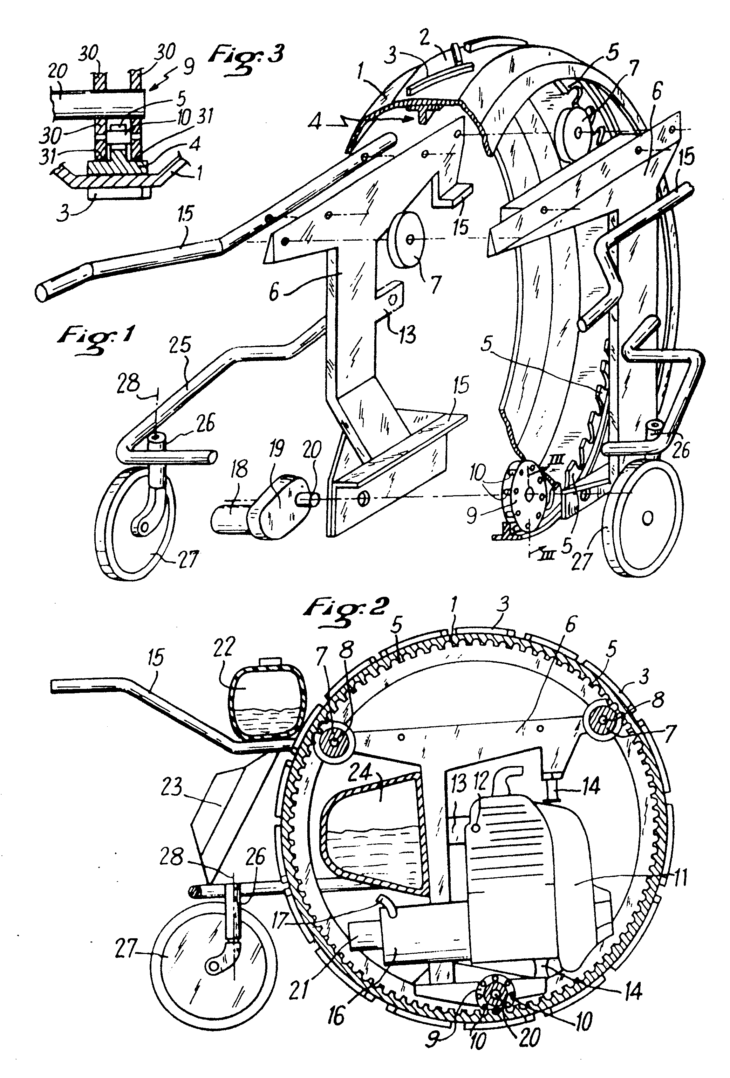

la Fig. 1 est une vue en perspective partiellement éclatée et partiellement en coupe des éléments principaux du dispositif selon l'invention.

la Fig. 2 est une vue en coupe selon un plan médian vertical de la roue cage.

la Fig. 3 est une vue en coupe selon la Fig. III-III de la Fig. 1.

En référence aux dessins, le dispositif selon l'invention comporte une roue cage 1 en forme de coquille circulaire. Selon le mode de réalisation préféré illustré, la roue cage présente, selon une coupe transversale, un profil interne concave et un profil externe convexe. Du côté externe, la roue cage 1 comporte une bande de roulement 2 sur laquelle sont fixées des barrettes antidérapantes 3 disposées en quinconce. A l'intérieur de la roue cage, celle-ci comporte une crémaillère en T inversé généralement désignée en 4 ayant des dents 5 tournées vers l'inté rieur de la roue cage 1 et disposées selon un pas régulier. La crémaillère 4 est fixée à l'intérieur de la roue cage 1 dans un plan médian de celle-ci perpendiculaire à l'axe de la roue cage.

Un châssis est monté mobile à l'intérieur de la roue cage. Ce châssis comporte deux éléments 6 généralement en forme de T disposés de part et d'autre du plan médian de la roue cage. Aux extrémités de la branche horizontale, qui est disposée dans la partie haute de la roue cage, le châssis supporte des organes de positionnement 7 en forme de poulies à gorge qui sont montées pour tourner librement sur des axes 8 portés par le châssis, les poulies à gorge 7 étant disposées à cheval sur la crémaillère 4. A sa partie inférieure, le châssis supporte un troisième organe de positionnement 9 en forme de poulie à gorge comportant des flancs 30 espacés l'un de l'autre pour former une gorge et entre lesquels des rouleaux 10 sont montés pour tourillonner et s'étendent transversalement à la gorge selon un pas égal à celui de la crémaillère 4. La poulie à gorge 9 est disposée à cheval sur la crémaillère 4 et l'un des rouleaux 10 est engagé entre deux dents 5 de la crémaillère 4, suffisamment en retrait par rapport à un bord périphérique 31 des flancs 30 pour que les rouleaux 10 ne touchent pas le fond des dents 5 de la crémaillère. Le bord périphérique 31 des flancs 30 prend donc appui à l'intérieur de la roue cage sur les bords latéraux de la crémaillère qui constituent des chemins de roulement pour les bords périphériques 31. Les deux poulies à gorge 7 et la poulie à gorge 9 forment un triangle ayant une pointe dirigée vers le bas de sorte qu'en position normale de fonctionnement, le poids du châssis et des éléments qui lui sont associés maintient fermement la poulie 9 en appui sur la roue cage 1 à l'intérieur de celle-ci.

Un moteur d'entraînement 11 est fixé au châssis de façon flottante au moyen d'un axe 12 engagé dans des pattes 13 fixées aux éléments de châssis 6, et de tampons élastiques 14 prenant appui sur des pattes 15 solidaires des éléments de châssis 6. La transmission des vibrations du moteur d'entraînement, qui est de préférence un moteur thermique, au châssis est ainsi minimisée.

Des brancards 15 sont fixés au châssis à la partie supérieure de celui-ci et s'étendent vers l'extérieur de la roue cage de part et d'autre de celle-ci de façon symétrique par rapport à son plan médian.

Une pompe hydraulique d'entraînement 16 est fixée au moteur d'entraînement 11 et lui est associée pour être entraînée par celui-ci. La pompe d'entraînement 16 comporte une sortie 17 reliée par des conduits non représentés à un moteur hydraulique 18. Le moteur hydraulique 18 est lui-même fixé à un organe réducteur 19 dont l'arbre de sortie 20 est solidaire en rotation de la poulie à gorge 9, par exemple au moyen d'un montage à clavette non représenté. La pompe hydraulique d'entraînement 16 est de préférence une pompe à débit variable par exemple une pompe à plateau oscillant dont l'inclinaison du plateau est réglée par une commande à câble reliée à une poignée tournante portée par l'un des brancards.

Une pompe hydraulique d'actionnement d'outils 21 est fixée dans le prolongement de la pompe hydraulique d'entraînement 16 et est associée à l'arbre moteur du moteur d'entraînement 11 pour être entraînée par celui-ci.

Le dispositif comporte, bien entendu, les accessoires habituels nécessaires à son fonctionnement tels qu'un réservoir d'alimentation 22 et un organe de refroidissement 23 pour le circuit hydraulique, et un réservoir de fluide hydraulique 24 pour les pompes hydrauliques 16 et 21, ces différents éléments étant, directement ou indirectement reliés au châssis mobile. La disposition des différents éléments par rapport au châssis est prévue pour que le centre de gravité du châssis mobile et des éléments qui lui sont associés soit situé en-dessous de l'axe de la roue cage 1, et de préférence à l'aplomb de celui-ci. En particulier, le moteur d'entraînement 11 et les pompes hydrauliques 16 et 21 constituant les éléments les plus lourds du dispositif sont de préférence disposés eux-mêmes en-dessous de l'axe de la roue cage 1.

Dans le mode de réalisation préféré illustré, le dispositif comporte en outre un support de roues stabilisatrices 25 formé par un cadre ayant généralement la forme d'un U dont les branches sont fixées aux éléments de châssis 6 et qui s'étend vers l'extérieur de la roue du même côté que les brancards 15. Des manchons verticaux 26 sont fixés au support 25 de part et d'autre de la roue cage 1 et des roues stabilisatrices 27 sont montées pour pivoter librement dans les manchons 26 autour d'axes verticaux 28.

Le fonctionnement du dispositif selon l'invention est le suivant: les pompes hydrauliques étant débrayées du moteur d'entraînement, ou étant au point mort lorsqu' il s'agit de pompes à débit variable, le moteur d'entraînement 11 est mis en route. Lorsque l'on souhaite simplement faire avancer le dispositif, de l'huile sous pression est envoyée par la pompe hydraulique 16 au moteur hydraulique 18 qui entraîne la poulie à gorge 9. En raison de la position du centre de gravité de l'ensemble en-dessous de l'axe de la roue cage 1, et en raison de la faible dimension de la poulie à gorge 9 par rapport au diamètre interne de la roue cage, il suffit à l'opérateur d'exercer un faible effort sur les brancards 15 pour maintenir le châssis dans une position sensiblement constante et s'assurer ainsi que la totalité du couple de réaction entre la crémaillère 4 et les rouleaux 10 de la poulie à gorge 9 sert à faire tourner la roue cage 1 et donc à déplacer l'ensemble du dispositif sur le sol. Si les roues stabilisatrices rencontrent un obstacle, qu'il s'agisse d'un trou, d'une pierre ou de broussailles, l'utilisateur peut aisément soulever les brancards 15 pour franchir cet obstacle. Lorsque l'utilisateur souhaite incurver la trajectoire du dispositif, il lui suffit de pousser latéralement sur les brancards 15 et les roues 27 prennent automatiquement l'orientation correspondante.

Si le dispositif selon l'invention est utilisé pour le débroussaillage, des outils de débroussaillage sont disposés à l'avant de la roue cage et sont reliés à la pompe hydraulique d'actionnement 21 qui est mise en service simultanément à la pompe hydraulique d'entraînement 16. Lorsque le dispositif selon l'invention est utilisé pour la taille des arbres ou pour d'autres applications statiques, la pompe hydraulique d'entraînement 16 est débrayée ou mise au point neutre lorsque le dispositif est sur le chantier et la pompe d'actionnement d'outils 21 est mise au service.

Bien entendu, l'invention est susceptible de variantes de réalisation qui apparaîtront à l'homme de métier. En particulier, bien que sur le mode de réalisation illustré le réservoir d'essence 22 du moteur d'entraînement 11 soit disposé à l'extérieur de la roue cage 1, on peut prévoir de disposer celui-ci à l'intérieur de celle-ci.

De même, on peut utiliser le dispositif selon l'invention sans roues stabilisatrices afin de réduire l'encombrement en largeur du dispositif à son minimum. Dans ce cas, le centre de gravité de l'ensemble sera ramené aussi bas que possible afin de minimiser l'effort que devra faire l'utilisateur pour maintenir la roue cage et les organes qui lui sont associés dans un plan sensiblement vertical. Pour certaines applications particulières, notamment pour des travaux de pulvérisation, les moyens d'actionnement d'outils hydrauliques peuvent être remplacés par des moyens d'actionnement d'outils pneumatiques.

On peut également prévoir des moyens pour bloquer les roues stabilisatrices selon une direction donnée ou les relier à une partie articulée des brancards pour les transformer en roues directrices.

**Revendications**

1. Dispositif auto-porté pour l'actionnement d'outils comportant une roue cage (1) à l'intérieur de laquelle est monté un châssis (6) mobile par rapport à la roue cage, ce châssis supportant un moteur d'entraînement (11) relié à un organe d'entraînement (9) disposé à l'intérieur de la roue cage en regard d'une crémaillère fixée à l'intérieur de la roue cage dans un plan médian de celle-ci, le châssis étant équipé de brancards s'étendant vers l'extérieur de la roue cage de part et d'autre de celle-ci, caractérisé en ce que la roue cage a une forme de coquille circulaire ayant, selon une coupe transversale, un profil externe convexe et en ce que le châssis est supporté par des organes de positionnement (7, 9) prenant appui à l'intérieur de la roue cage, l'organe de positionnement inférieur assurant la fonction d'organe d'entraînement.

2. Dispositif selon la revendication 1, caractérisé en ce que l'organe d'entraînement (9) est une poulie à gorge disposée à cheval sur la crémaillère et supportant des rouleaux (10) s'étendant transversalement à la gorge et disposés selon un pas égal à un pas de la crémaillère, la poulie à gorge comportant des flancs (30) ayant un bord périphérique (31) prenant appui à l'intérieur de la roue cage.

3. Dispositif selon la revendication 1 ou la revendication 2, caractérisé en ce qu'il comporte trois organes de positionnement disposés selon un triangle ayant une pointe dirigée vers le bas.

4. Dispositif selon l'une des revendications 1 à 3, caractérisé en ce que les organes de positionnement (7) qui ne sont pas reliés au moteur d'entraînement sont des poulies à gorge montées pour tourner librement sur un axe (8) parallèle à l'axe de la roue cage, ces poulies étant disposées à cheval sur la crémaillère (4).

5. Dispositif selon l'une des revendications 1 à 4, caractérisé en ce qu'il comporte une pompe hydraulique d'entraînement (16) fixée au moteur d'entraînement (11) pour être entraînée par celui-ci, cette pompe hydraulique ayant une sortie reliée à un moteur hydraulique (18) entraînant un axe (20) solidaire en rotation d'un organe de positionnement (9) devant être entraîné en rotation.

6. Dispositif selon la revendication 5, caractérisé en ce que la pompe hydraulique d'entraînement (16) est une pompe à débit variable.

7. Dispositif selon l'une des revendications 1 à 6, caractérisé en ce que les moyens d'actionnement d'outils comprennent une pompe hydraulique (21) associée au moteur d'entraînement pour être entraînée par celui-ci.

Fig: 3

Fig: 1

Fig: 2

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-3 193 038 (KRONKRIGHT) <br> * Figure 4 * | 1 | B 62 D 51/06 |
| A | | 3 | |
| | --- | | |
| Y | FR-A-1 232 807 (DAFERNER) <br> * En entier * | 1 | |
| | --- | | |
| A | DE-C- 299 323 (SCHULTZ) <br> * En entier * | 1,2 | |
| | --- | | |
| A | FR-A- 746 733 (LABRUYERE) <br> * En entier * | 1 | |
| | --- | | |
| A | FR-A-1 176 973 (ALBARET) <br> ----- | 1,2 | |

DOMAINES TECHNIQUES RECHERCHES (Int. Cl.4)

B 02 D

Le présent rapport a été établi pour toutes les revendications

| Lieu de la recherche | Date d'achèvement de la recherche | Examinateur |
|---|---|---|
| LA HAYE | 26-07-1989 | SCHMAL R. |